# FASCICULE DE BREVET EUROPEEN

(11) **EP 3 220 034 B1**
(45) Date de publication et mention de la délivrance du brevet: **12.09.2018**
(21) Numéro de dépôt: 17160476.2
(22) Date de dépôt: 13.03.2017
(51) Int. Cl.: F16L 37/23

(54) **ELÉMENT DE RACCORD FLUIDIQUE ET RACCORD FLUIDIQUE COMPRENANT UN TEL ÉLÉMENT**
KUPPLUNGSELEMENT FÜR DIE VERBINDUNG VON FLÜSSIGKEITSFÜHRENDEN BAUTEILEN UND KUPPLUNG MIT EINEM SOLCHEN ELEMENT.
FEMALE ELEMENT FOR A FLUID COUPLING AND FLUID COUPLING INCLUDING SUCH AN ELEMENT

(30) Priorité: 14.03.2016 FR 1652114
(43) Date de publication de la demande: 20.09.2017
(73) Titulaire: Staubli Faverges, 74210 Faverges (FR)
(72) Inventeur: TIBERGHIEN, Alain-Christophe, 74320 SEVRIER (FR); DURIEUX, Christophe, 73200 GILLY SUR ISERE (FR)
(74) Mandataire: Lavoix

(56) Documents cités:
- GB-A- 749 795
- GB-A- 826 599
- GB-A- 1 533 080
- US-A- 2 854 259
- US-A- 3 188 123

## Description

L'invention a trait à un élément de raccord fluidique permettant de constituer, avec un embout complémentaire, un raccord permettant la jonction de canalisations de circulation d'un fluide.

Il est connu de réaliser un raccord fluidique au moyen de deux embouts de type « clamp ». Ces embouts clamps sont accouplés deux à deux en intercalant entre eux un joint d'étanchéité qui est logé dans une rainure frontale de chacun de ces embouts, autour d'un canal central de circulation de fluide ménagé dans chacun de ces embouts. Les deux embouts clamps disposés de part et d'autre du joint d'étanchéité sont maintenus en position et en pression contre le joint au moyen d'un collier mis en place autour de brides respectivement prévues sur chacun des deux embouts clamps, ce collier étant verrouillé en configuration fermée. Ce type de raccordement permet de rattraper d'éventuels jeux dus aux tolérances de fabrication des embouts clamps, tout en garantissant l'étanchéité par écrasement du joint entre les deux embouts.

Ce type d'assemblage est relativement long à mettre en oeuvre car il requiert de positionner le joint correctement vis-à-vis des deux rainures frontales des embouts clamps, puis de positionner et de serrer le collier autour de leurs brides, ce qui doit être effectué avec précaution, faute de quoi l'étanchéité du raccordement ne peut pas être assurée. Or, pour certaines applications, il serait avantageux de rendre plus rapide l'accouplement d'un embout clamp sur un élément complémentaire, tout en garantissant l'étanchéité du raccord ainsi formée.

Il est connu de US-A-3106378 de recourir à un verrouillage rapide d'un embout par une rangée de billes mobiles dans le corps d'un élément de raccord et maintenues en position radiale interne dans une gorge de l'embout par une bague externe mobile. Ce type de verrouillage est particulièrement adapté aux embouts présentant une gorge de géométrie adaptée aux billes et des surfaces externes étendues et réalisées avec précision, de part et d'autre de la gorge, pour le guidage de l'embout dans le corps de l'élément de raccord, ce qui n'est pas le cas des embouts de type clamp.

Une autre contrainte à prendre en compte concerne le fait qu'un élément de raccord compatible avec un embout clamp doit pouvoir être facilement nettoyé, tout particulièrement dans le domaine alimentaire, et être mis en place moyennant des efforts d'accouplement d'intensité relativement modestes.

US-A-3 188 123 envisage par ailleurs d'utiliser un corps bipartite pour un élément femelle de raccord, en coinçant un joint torique entre deux parties du corps, axialement en regard d'une douille interne rapportée sur le corps bipartite et destinée à pénétrer dans un embout mâle. Une paroi avant de la douille interne est décalée vers l'avant par rapport au joint et au logement du joint. L'embout peut heurter la douille interne en cours d'accouplement, avant de parvenir au contact du joint, ce qui peut endommager l'embout et réduire l'étanchéité ainsi que la durée de vie du joint.

C'est à ces problématiques et contraintes qu'entend plus particulièrement répondre la présente invention en proposant un nouvel élément de raccord fluidique compatible avec un embout de type clamp et permettant d'assurer une liaison étanche et pérenne avec un tel embout.

A cet effet, l'invention concerne un élément de raccord apte à être accouplé avec un embout complémentaire pour la jonction des deux conduites de fluide, cet élément de raccord comprenant un corps de réception partiel de l'embout complémentaire, ce corps étant centré sur un axe longitudinal et définissant, d'une part, un canal de circulation de fluide au sein du corps et, d'autre part, une chambre d'étanchéité qui entoure le canal et dans laquelle est logé un joint d'étanchéité apte à coopérer avec l'embout complémentaire introduit dans le corps, la chambre d'étanchéité étant délimitée par une paroi radiale externe, une paroi avant, une paroi arrière et, radialement vers l'intérieur par rapport à l'axe longitudinal, par une paroi radiale interne solidaire du corps. Cet élément de raccord comprend un mécanisme de verrouillage qui comporte, d'une part, des organes de verrouillage mobile radialement dans ce corps par rapport à l'axe longitudinal, entre une position de blocage de l'embout complémentaire dans le corps et une position de libération d'un passage de l'embout dans le corps et, d'autre part, une bague de verrouillage montée autour du corps et mobile par rapport à celui-ci, entre une première position de maintien des organes de verrouillage dans leur position de blocage et une deuxième position dans laquelle la bague de verrouillage se s'oppose pas au déplacement des organes de verrouillage vers la position de libération. Conformément à l'invention, le bord avant de la paroi radiale interne est en retrait, le long de l'axe longitudinal, par rapport à la surface arrière de la paroi avant.

Grâce à l'invention, le mécanisme de verrouillage monté sur le corps de l'élément de raccord permet d'assurer une immobilisation relative de l'élément de raccord et de l'embout, sans avoir recours à un collier relativement complexe à mettre en oeuvre. En outre, grâce à la paroi radiale interne formée sur le corps de l'élément de raccord, qui délimite vers l'intérieur la chambre d'étanchéité et contre laquelle l'embout peut venir en butée en configuration accouplée, le pivotement de l'embout dans l'élément de raccord est limité. Comme le bord avant de la paroi radiale interne est en retrait, c'est-à-dire décalé vers l'arrière par rapport à la surface arrière de la paroi avant, l'embout complémentaire peut venir au contact du joint en cours d'accouplement avant de venir buter contre la paroi radiale interne, ce qui garantit le maintien du contact étanche entre cet embout et le joint d'étanchéité reçu dans la chambre d'étanchéité lorsque, en configuration accouplée, l'embout complémentaire pivote dans le corps de l'élément de raccord jusqu'à venir en butée contre la paroi radiale interne. L'étanchéité du raccord en configuration accouplée est donc efficacement assurée. Selon des aspects avantageux mais non obligatoires de l'invention, un tel élément de raccord peut incorporer une ou plusieurs des caractéristiques suivantes, prises dans toute combinaison techniquement admissible :
- La paroi radiale interne de la chambre d'étanchéité est pourvue d'au moins une ouverture de mise en communication de la chambre d'étanchéité avec le canal de circulation de fluide au sein du corps.
- Les parois radiale externe, arrière et radiale interne forment une pièce monobloc.
- La paroi avant forme une pièce monobloc avec les parois radiales externe, arrière et radiale interne.
- En configuration désaccouplée de l'élément de raccord, le joint dépasse radialement de la paroi avant, en direction de l'axe longitudinal, au niveau d'une portion de l'axe longitudinal disposée à l'avant du bord avant de la paroi radiale interne.
- Les logements des organes de verrouillage dans le corps sont ménagés dans la paroi avant et les organes de verrouillage font saillie radialement de la paroi avant dans leur position de blocage.
- Les organes de verrouillage sont des billes, et alors que la bague de verrouillage définit une surface radiale interne de recouvrement des billes dans leur position de blocage lorsque la bague de verrouillage est dans sa première position et un volume de réception partielle des billes dans leur position de libération lorsque la bague de verrouillage est dans sa deuxième position, ce volume de réception partielle étant lui-même délimité vers l'extérieur, radialement à l'axe longitudinal, par une portion de la bague de verrouillage.
- Le joint d'étanchéité comprend une base externe en appui contre la paroi radiale externe et/ou la paroi arrière de la chambre d'étanchéité et au moins une lame qui, en configuration désaccouplée de l'élément de raccord, s'étend à partir de la base et vers l'axe longitudinal.
- En configuration désaccouplée de l'élément de raccord, la lame s'étend vers l'axe longitudinal, à partir d'une portion avant de la base et selon une direction dirigée vers l'arrière de l'élément de raccord.
- En configuration désaccouplée de l'élément de raccord, un angle, défini entre la lame et la base, est compris entre 65° et 80°.
- En configuration désaccouplée de l'élément du raccord, le joint d'étanchéité est symétrique par rapport à un plan radial à l'axe longitudinal.
- En configuration désaccouplée de l'élément de raccord, le joint d'étanchéité présente, dans un plan radial à l'axe longitudinal, une section globalement en forme de U ouvert en direction de l'axe longitudinal.
- Une rondelle élastique est disposée, en appui contre le joint d'étanchéité, dans la chambre d'étanchéité. De préférence, cette rondelle prend appui sur la paroi arrière de la chambre d'étanchéité et repousse le joint d'étanchéité en direction d'une paroi avant délimitant la chambre d'étanchéité.

Selon un deuxième aspect, l'invention concerne un raccord qui comprend un élément de raccord et un embout complémentaire. L'embout complémentaire est pourvu d'un canal central de passage de fluide, d'une cavité radiale externe de réception d'au moins un organe de verrouillage en configuration accouplée du raccord, la cavité de réception étant délimitée à l'avant par une bride, d'une face avant et d'une rainure circonférentielle qui borde la face avant, laquelle est disposée radialement entre le canal central et la rainure circonférentielle. Conformément à l'invention, l'élément de raccord est tel que mentionné ci-dessus, alors que, en configuration accouplée du raccord, la paroi interne de la chambre d'étanchéité est alignée selon l'axe longitudinal de l'élément de raccord avec la face avant de l'embout complémentaire.

L'invention sera mieux comprise et d'autres avantages de celle-ci apparaîtront plus clairement à la lumière de la description qui va suivre de cinq modes de réalisation d'un élément de raccord et d'un raccord conformes à son principe donnée uniquement à titre d'exemple et faite en référence aux dessins annexés dans lesquels :
- la figure 1 est une coupe longitudinale de principe des éléments mâle et femelle d'un raccord fluidique conforme à l'invention en configuration désaccouplée,
- la figure 2 est une coupe analogue à la figure 1 lors d'une première étape d'emmanchement des éléments du raccord,
- la figure 3 est une coupe analogue à la figure 2 lors d'une deuxième étape d'emmanchement,
- la figure 4 est une coupe analogue aux figures 1 à 3 lorsque le raccord est configuration accouplée,
- la figure 5 est une vue de détail correspondant au détail V à la figure 1, pour un raccord et un élément de raccord conformes à un deuxième mode de réalisation de l'invention,
- la figure 6 est une vue de détail correspondant au détail VI à la figure 4, pour le raccord et l'élément de raccord du deuxième mode de réalisation,
- les figures 7 et 8 sont des vues de détail respectivement analogues aux figures 5 et 6, pour un raccord et un élément de raccord conformes à un troisième mode de réalisation de l'invention,
- les figures 9 et 10 sont des vues de détails respectivement analogues aux figures 5 et 6, pour un raccord et un élément de raccord conformes à un quatrième mode de réalisation de l'invention,
- la figure 11 est une coupe analogue à la figure 1 pour un raccord et un élément de raccord conformes à un cinquième mode de réalisation de l'invention et
- la figure 12 est une coupe analogue à la figure 4 pour le raccord et l'élément de raccord conformes au cinquième mode de l'invention.

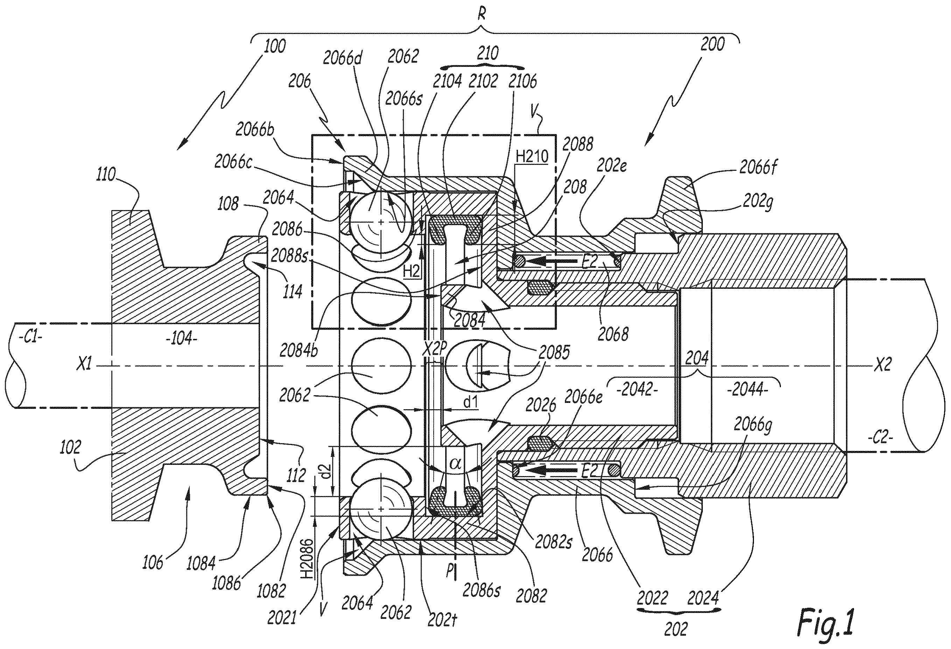

Le raccord fluidique R représenté aux figures 1 à 4 comprend élément femelle 200 destiné à être accouplé avec un embout mâle 100 complémentaire de cet élément femelle.

L'embout mâle 100 est de type embout clamp tel que défini par les normes DIN-32676 ou ASME BPE-2007 pour un embout de diamètre extérieur de bride égal à 25 mm. Pour un embout de diamètre extérieur de bride égal à 34, 50 ou 64 mm, celui-ci est défini par les normes ISO 2852, DIN 32676, BS 4825-3 et/ou ASME BPE-2007.

Cet embout mâle 100 comprend un corps monobloc 102, de préférence réalisé en métal, qui définit un canal central 104 de circulation de fluide, lequel canal est raccordé, d'une façon connue en soi et sur l'arrière du corps 102, à une canalisation C1 de circulation de fluide. Pour la clarté du dessin, cette canalisation est représentée entre traits mixtes uniquement à la figure 1. L'embout 100 est centré sur un axe longitudinal X1 qui constitue un axe de symétrie pour le corps 102. En particulier, le canal 104 est cylindrique à section circulaire centrée sur l'axe X1. Sur sa surface radiale externe, le corps 102 est pourvu d'une gorge périphérique 106 qui constitue une cavité externe de réception d'un moyen de verrouillage. Ce moyen de verrouillage peut être une paroi d'un collier, tel que connu dans l'état de la technique, ou des billes de l'élément femelle, comme cela ressort des explications qui suivent. La gorge 106 est délimitée, axialement le long de l'axe X1, vers l'avant par une bride 108 et vers l'arrière par une collerette 110, cette collerette étant facultative dans la mesure où le corps 102 peut conserver le diamètre réduit du fond de la gorge 106 en allant vers l'arrière de l'embout mâle 100.

A cet égard, on définit le côté avant d'un embout ou élément du raccord R comme le côté de cet embout ou élément orienté dans le sens de l'emmanchement ou de l'accouplement, c'est-à-dire orienté vers l'élément ou l'embout de raccord complémentaire pendant l'emmanchement. A l'inverse, on définit le côté arrière d'un embout ou élément du raccord R comme la direction opposée à l'élément ou l'embout de raccord complémentaire. Ainsi, dans l'exemple des figures 1 à 4, l'avant de l'embout mâle 100 est situé sur la droite de cet embout, alors que l'avant de l'élément femelle 200 est situé sur la gauche de cet embout.

On note 1082 le bord avant de la bride 108, 1084 sa surface radiale externe et 1086 un chanfrein de jonction entre le bord 1082 et la surface 1084.

L'embout mâle 100 est pourvu d'une face avant 112 qui est ménagée en retrait vers l'arrière, par rapport au bord avant 1082 de la bride 108. Cette face avant est bordée, sur l'extérieur, par une rainure circonférentielle 114 qui est destinée à recevoir une partie d'un joint d'étanchéité lorsque cet embout 100 est utilisé de façon conventionnelle, en coopération avec un embout de forme analogue et avec un collier. La face avant 112 est disposée, radialement à l'axe X1, entre le canal central 104 et la rainure circonférentielle 114. En pratique, la face avant 112 et la rainure 114 sont réalisées sous la forme d'un lamage à partir de l'avant de l'embout mâle 100.

L'élément femelle 200 est centré sur un axe longitudinal X2 et comprend un corps 202 destiné à recevoir une portion avant de l'embout mâle 100 en configuration accouplée du raccord R. Le corps 202 est formé d'une partie avant monobloc 2022 et d'une partie arrière monobloc 2024 vissée sur la partie avant, avec interposition d'un joint torique d'étanchéité 2026. Les parties 2022 et 2024 sont réalisées en métal, de préférence en acier.

Le corps 202 définit un canal central 204 de passage de fluide. Ce canal central 204 est formé par deux canaux centraux unitaires 2042 et 2044 respectivement ménagés au centre d'une portion arrière de la partie avant 2022 et au centre de la partie arrière 2024 du corps 202. Ce canal 204 est raccordé, sur l'arrière du corps 202, à une canalisation C2 de circulation de fluide qui est représentée en traits mixtes uniquement à la figure 1, pour la clarté du dessin.

Un mécanisme de verrouillage 206 est prévu sur l'élément femelle 200 et comprend une rangée de billes 2062 disposée dans des orifices radiaux traversants 2064 ménagés dans le corps 202, à proximité de son bord avant 2021. Les orifices 2064 sont traversants en ce sens qu'ils débouchent à la fois sur une surface radiale interne 202s et sur une surface radiale externe 202t du corps 202. Le débouché de chaque orifice 2064 sur la surface radiale interne 202s du corps 202 présente un diamètre inférieur à celui des billes 2062, ce qui permet de limiter un mouvement centripète des billes 2062 en direction de l'axe X2. Le mécanisme 206 comprend également une bague de verrouillage 2066, qui est monté coulissante autour du corps 202, ainsi qu'un ressort 2068 qui exerce sur cette bague un effort élastique axial E2 dirigé vers l'avant de l'élément femelle 200. Le ressort 2068 est un ressort spiral de compression disposé radialement entre le corps 202 et la bague 2066, en appui contre un épaulement externe 202e du corps 202 et contre un épaulement interne 2066e de la bague de verrouillage 2066.

Du côté de son bord avant 2021, le corps 202 présente un diamètre externe plus important que dans sa partie autour de laquelle est monté le ressort 2068. On note 2066s la surface radiale interne de la bague 2066 qui entoure la partie avant du corps 202 de plus grand diamètre. Cette surface 2066s présente un diamètre sensiblement égal au diamètre extérieur de la surface radiale externe 202t de la partie avant du corps 202, de telle sorte que, lorsque cette surface 2066s est en regard, le long de l'axe X2, avec les billes 2062, elle contraint ces billes à faire saillies radialement vers l'intérieur, par rapport à la surface radiale interne 202s du corps 202, à travers les débouchés respectifs des orifices 2064. Ceci correspond, notamment, à la configuration représentée à la figure 1.

Au voisinage de son bord avant 2066b, la bague 2066 est pourvue d'une portion divergente 2066d dont la surface interne définit un chanfrein 2066c convergeant vers l'axe longitudinal X2 en s'éloignant du bord avant 2066b. Il est ainsi formé un volume creux V entre le chanfrein 2066c et la surface radiale externe 202t du corps 202 au niveau des orifices 2064.

D'autre part, la bague de verrouillage 2066 est pourvue d'une collerette périphérique externe 2066f sur laquelle un opérateur peut exercer un effort axial E4 parallèle à l'axe X2 et dirigé vers l'arrière, supérieur à l'effort E2, afin d'amener le volume V en regard des billes 2062 lorsque cela est nécessaire, comme expliqué ci-après.

L'élément 200 définit par ailleurs une chambre d'étanchéité 208 dans laquelle est disposé un joint d'étanchéité 210 en élastomère.

La chambre d'étanchéité entoure radialement le canal unitaire 2042 ménagé dans la partie avant 2022 du corps 202. Cette chambre d'étanchéité est délimitée, radialement à l'axe X2 entre une paroi radiale externe 2082 et une paroi radiale interne 2084 qui est pourvue de quatre ouvertures 2085 de mises en communication du canal 204 avec la chambre d'étanchéité 208. Le long de l'axe longitudinal X2, la chambre d'étanchéité 208 est délimitée entre une paroi avant 2086 et une paroi arrière 2088 qui relie les deux parties de diamètre différent du corps 202 mentionnées ci-dessus. Les parois 2082, 2084, 2086 et 2088 forment une pièce monobloc. Il s'agit de portions de la partie avant 2022 du corps 202. Ainsi la paroi 2084 est solidaire du corps 202, dans la mesure où elle est fixe par rapport à ce corps en configuration désaccouplée et en cours d'accouplement. La paroi radiale interne 2084 délimite la portion avant du canal 2042 et est radialement disposée entre l'axe longitudinal X2 et la chambre d'étanchéité 208.

Les parois 2082, 2084, 2086 et 2088 définissent respectivement des surfaces radiale interne 2082s, radiale externe 2084s, axiale arrière 2086s et axiale avant 2088s tournées vers la chambre d'étanchéité 208 et qui forment des contours de la chambre d'étanchéité 208.

La chambre d'étanchéité 208 est disposée à l'arrière des logements 2064 et les logements 2064 sont ménagés dans la paroi avant 2086.

La chambre d'étanchéité 208 forme un volume annulaire autour de l'axe X2 au sein du corps 202.

Sous l'effort E2 du ressort 2068, en configuration désaccouplée, la bague de verrouillage 2066 vient en appui contre la surface extérieure 2088t de la paroi 2088 qui est opposée à la chambre d'étanchéité 208. La paroi radiale externe 2082 constitue le fond de la chambre d'étanchéité 208. La surface axiale arrière 2086s de la paroi avant 2086 s'étend radialement, à partir de la paroi radiale externe 2082 et vers l'axe longitudinal X2, sur une hauteur radiale inférieure à la dimension radiale de la surface avant 2088s de la paroi arrière 2088. En d'autres termes, la chambre d'étanchéité 208 est fermée du côté arrière de l'élément femelle 200, mais partiellement ouverte en direction du bord avant 2021. Plus précisément la chambre d'étanchéité 208 est ouverte selon l'axe longitudinal X2 en direction de l'embouchure de l'élément de raccord 200.

On note 2084b le bord avant de la paroi radiale interne 2084 qui est dirigé vers l'avant de l'élément femelle 200. Ce bord avant est destiné à venir en appui contre la face avant 112 de l'embout mâle 100 en cours d'emmanchement des éléments 100 et 200 l'un dans l'autre et, éventuellement, en configuration accouplée du raccord R. Le bord avant 2084b est une surface perpendiculaire à l'axe X2. La surface radiale interne 2082s de la paroi radiale externe 2082 s'étend, entre la paroi arrière 2088 et la paroi avant 2086, sur une longueur axiale L2082 supérieure à la longueur axiale L2084 de la paroi radiale interne 2084. Plus précisément, la longueur axiale L2084 de la paroi radiale interne 2084, définie depuis la paroi arrière 2088 jusqu'au bord avant 2084b de la paroi radiale interne 2084, est comprise entre 50% et 90%, de préférence de l'ordre de 75%, de la longueur axiale L2082 de la surface radiale interne 2082s. En d'autres termes, la chambre d'étanchéité 208 est fermée du côté externe de l'élément femelle 200, mais partiellement ouverte radialement vers l'intérieur en direction de l'axe longitudinal X2.

Le bord avant 2084b de la paroi radiale interne 2084 est en retrait, le long de l'axe X2, par rapport à la surface axiale arrière 2086s. En d'autres termes, une distance axiale d1, mesurée parallèlement à l'axe X2, entre la surface axiale arrière 2086s et le bord avant 2084b, est non nulle et la surface axiale arrière 2086s est disposée plus en avant que le bord avant 2084b le long de l'axe X2.

Le joint d'étanchéité 210 présente une géométrie de révolution autour d'un axe confondu avec l'axe X2 en configuration montée du joint 210 dans la chambre d'étanchéité 208. La section du joint 210 est, dans le plan des figures 1 à 4 qui est un plan radial à l'axe X2, globalement en forme de U ouvert en direction de l'axe longitudinal X2. Le joint 210 comprend une base 2102 externe annulaire et deux branches formées respectivement par une lame avant 2104 et une lame arrière 2106. La base 2102 comprend une surface externe plane apte à venir au contact de la surface radiale interne 2082s et une surface arrière apte à venir en contact avec la surface avant 2088s. En pratique, en configuration désaccouplée, en l'absence de contact avec l'embout 100, le joint d'étanchéité 210 est symétrique par rapport à un plan P perpendiculaire à l'axe X2 et passant par le centre de la base 2102. On remarque à la figure 1 que, en configuration désaccouplée du raccord, la lame avant 2104 s'étend depuis la portion avant de la base 2102 à la fois vers l'axe longitudinal X2 et selon une direction dirigée vers l'arrière de l'élément femelle 200, alors que la lame arrière 2106 s'étend depuis la portion arrière de la base 2102 à la fois vers l'axe longitudinal X2 et selon une direction dirigée vers l'avant de l'élément femelle 200. En outre, la racine de la lame avant 2104, c'est-à-dire sa zone de jonction avec la base 2102 est disposée, le long de l'axe X2, globalement en regard d'une portion X2P de l'axe X2 située entre la surface axiale arrière 2086s et le bord avant 2084b, c'est-à-dire entre la paroi avant 2086 et l'extrémité avant de la paroi radiale interne 2084. En outre, la lame avant 2104 dépasse radialement de la paroi avant 2086 en direction de l'axe longitudinal X2 au niveau d'une portion de l'axe longitudinal X2 disposée à l'avant du bord avant 2084b. Les lames 2104 et 2106 convergent en direction du plan P en s'éloignant de la base 2102. On note α l'angle de convergence des lames 2104 et 2106 l'une vers l'autre. La valeur de cet angle α est comprise entre 20 et 50°, de préférence de l'ordre de 30°. Dans le plan de coupe radial des figures 1 à 4, chacune des lames 2104 et 2106 forme un doigt recourbé et incliné en direction du plan P qui est perpendiculaire à la base 2102. En particulier, la lame avant 2104 forme avec la base 2102 un angle aigu β, dont la valeur est comprise entre 65° et 80°, de préférence de l'ordre de 75°.

Les dimensions du joint d'étanchéité 210 sont définies en fonction de celles de la chambre d'étanchéité 208, de telle sorte que, lorsqu'il est en place dans la chambre d'étanchéité 208, le joint d'étanchéité 210 vient en appui par sa base 2102 contre la paroi radiale externe 2082 qui constitue le fond de la chambre d'étanchéité 208. Dans la configuration désaccouplée représentée à la figure 1, la lame avant 2104 dépasse radialement, en direction de l'axe longitudinal X2, par rapport à la paroi avant 2086, sur une hauteur radiale H2 correspond à environ la moitié de la hauteur radiale H2086 de la surface axiale arrière 2086s. Ainsi, la lame avant 2104 du joint d'étanchéité 210 est accessible pour l'embout 100 à partir de l'embouchure de l'élément femelle 200. En pratique, le rapport H2/H2086 peut être choisi entre 30% et 70%, de préférence entre 40% et 60%.

On note d2 la distance radiale entre le bord radial interne de la paroi avant 2086, correspondant à la surface 202s, et la surface radiale externe 2084s de la paroi 2084. Cette distance d2 est supérieure à la hauteur radiale H210 du joint 210, ce qui permet d'introduire le joint d'étanchéité 210 dans la chambre d'étanchéité 208 par l'avant de l'élément femelle 200. L'ouverture radiale entre les parois 2084 et 2086, de hauteur radiale d2, permet également de retirer aisément le joint d'étanchéité 210, notamment pour une opération de nettoyage complète de l'élément femelle 200.

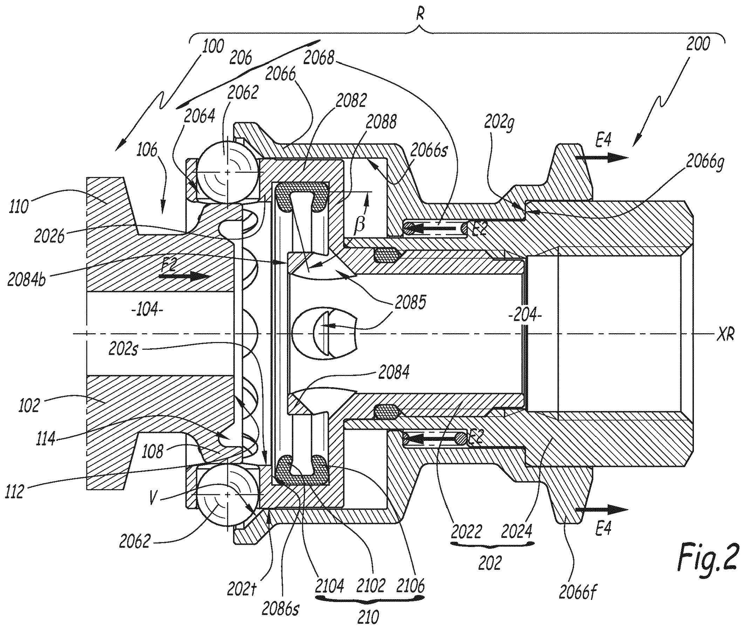

Pour emmancher les éléments 100 et 200 l'un dans l'autre, les axes X1 et X2 sont alignés et définissent alors ensemble un axe central XR du raccord R. L'opérateur fait reculer la bague 2066 à l'encontre de l'effort élastique E2 exercé par le ressort 2068 en exerçant sur la collerette 2066f un effort E4 dirigé vers l'arrière de l'élément femelle 200. Cet effort E4 est maintenu jusqu'à ce que la bague de verrouillage 2066 vienne en appui par un épaulement 2066g contre un épaulement externe correspondant 202g ménagé sur le corps 202, plus précisément sur sa partie arrière 2024. On atteint alors la configuration de la figure 2 où le volume V est en regard axialement, le long de l'axe XR, avec une portion des billes 2062.

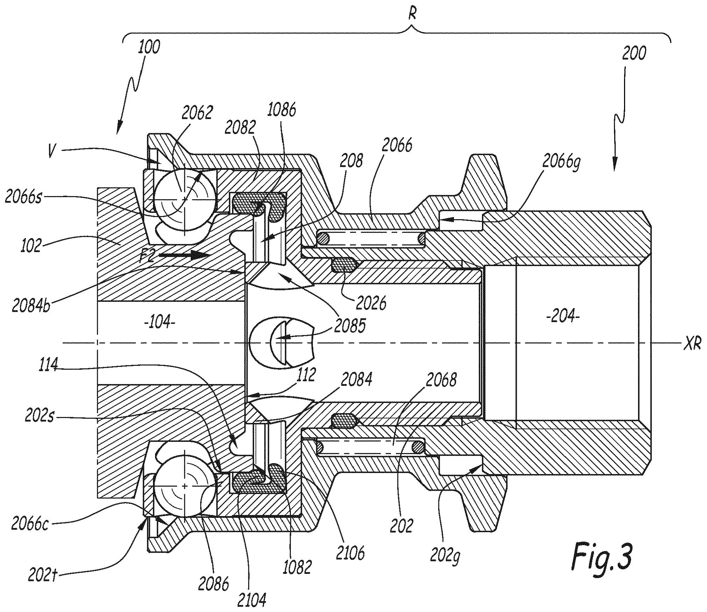

Dans ces conditions, il est possible d'introduire l'embout mâle 100 dans l'embouchure de l'élément femelle 200 définie par la surface radiale interne 202s. Lors de cette introduction, la bride 108 repousse radialement vers l'extérieur les billes 2062, au sein des orifices 2064, ce qui est possible car la surface 2066s ne s'oppose plus à ce déplacement radial centrifuge des billes 2062. Les billes 2062 atteignent ainsi une deuxième position différente de la première position représentée à la figure 1 et dans laquelle elles sont reçues partiellement dans le volume V et libèrent un passage pour l'embout 100 dans le corps 202. Le mouvement d'introduction de l'embout mâle 100 dans l'élément femelle 200 est poursuivi, dans le sens de la flèche F2, jusqu'à atteindre la configuration de la figure 3, où la face avant 112 de l'embout mâle 100 parvient en butée contre le bord avant 2084b de la paroi radiale interne 2084. Dans cette position, la gorge périphérique 106 de l'embout mâle 100 est en regard axialement avec les billes 2062.

Quand l'opérateur relâche son effort E4 sur la collerette 2066f, la bague de verrouillage 2066 est repoussée vers l'avant de l'élément femelle 200 par l'effort E2 du ressort 2068, ce qui a pour effet de réaligner axialement la surface 2066s avec les billes 2062. Le caractère convergent du chanfrein 2066c en direction de l'axe XR et vers l'arrière de l'élément femelle 200 facilite le déplacement centripète des billes 2062 car ce chanfrein fonctionne comme une rampe de renvoi des billes 2062 vers l'axe XR. Au terme du mouvement d'avance de la bague de verrouillage 2066 sous l'action du ressort 2068, par mise en butée contre la surface extérieure 2088t, la surface 2066s entoure radialement les billes de verrouillage 2062 et les maintient dans leur première position, où elles font saillie vers l'axe XR par rapport à la surface 202s. Les billes 2062 sont ainsi maintenues en prise dans la gorge 106, ce qui a pour effet de bloquer l'embout mâle 100 dans le corps 202 de l'élément femelle 200. Dans cette configuration représentée à la figure 3, l'embout mâle 100 est bloqué dans le corps 202, en ce sens qu'il ne peut pas être retiré de ce corps, selon un mouvement d'écartement des éléments 100 et 200 le long de l'axe XR, même si un mouvement de rotation relatif autour de l'axe XR demeure possible entre l'embout 100 et l'élément femelle 200.

En d'autres termes, les billes 2062 sont mobiles radialement par rapport à l'axe XR, au sein des orifices 2064 ménagés dans le corps 202, entre la première position de blocage représentée aux figures 1, 3 et 4 où elles font saillie radialement vers l'axe XR de la paroi avant 2086, à partir de la surface 202s, et bloquent la passage pour l'embout 100 dans le corps 202 lorsqu'il est engagé dans ce corps, et la deuxième position de libération représentée à la figure 2 où elles libèrent le passage pour l'embout 100 dans le corps 202, lors de l'accouplement ou du désaccouplement de l'embout 100 et de l'élément femelle 200.

La bague de verrouillage 2066 est, quant à elle, mobile le long de l'axe XR et autour du corps 202 entre une première position de maintien représentée aux figures 1, 3 et 4, où sa surface radiale interne 2066s bloque les billes 2062 dans leur première position de blocage, et une deuxième position, reculée vers l'arrière par rapport à la première position de maintien, qui est représenté à la figure 2 et dans laquelle la surface 2066s est décalée axialement par rapport aux billes 2062 vers l'arrière et le volume V est aligné avec ces billes, ce qui permet aux billes de se déplacer vers leur deuxième position de libération sous l'action de la bride 108.

Lors du passage de l'embout mâle 100 de la position de la figure 2 à celle de la figure 3, le bord avant 1082 de la bride 108 vient au contact de la lame avant 2104 du joint d'étanchéité 210 qui dépasse de la paroi 2086 comme expliqué ci-dessus. Plus précisément, lorsque l'embout mâle 100 progresse au contact du joint 210, la lame 2104 du joint 210 vient épouser la géométrie du corps 102 à proximité du chanfrein 1086.. En outre, du fait de l'introduction de l'embout mâle 100 dans l'élément femelle 200, la bride 108 exerce sur le joint 210 un effort axial dirigé vers la paroi arrière 2088, ce qui a pour effet de plaquer le joint 210 contre cette paroi arrière. Ceci assure l'étanchéité entre, d'une part, les canaux 104 et 204 et, d'autre part, l'extérieur du raccord R.

Ainsi, le joint 210 est à la fois déplacé en translation vers l'arrière de l'élément femelle 200, s'il n'était pas déjà au contact de la surface 2088s de la paroi arrière 2088 avant l'accouplement, et fléchi, au niveau de la lame avant 2104.

En fonction de la géométrie de l'embout, qui peut varier compte tenu des tolérances de fabrication du corps 102, le joint 210 est plus ou moins fléchi lors de l'introduction de l'embout 100 dans l'élément femelle 200. Dans tous les cas, un contact est assuré entre la bride 108 et la lame avant 2104 du joint 210, et entre le joint 210 et le corps 202, ce qui assure l'étanchéité.

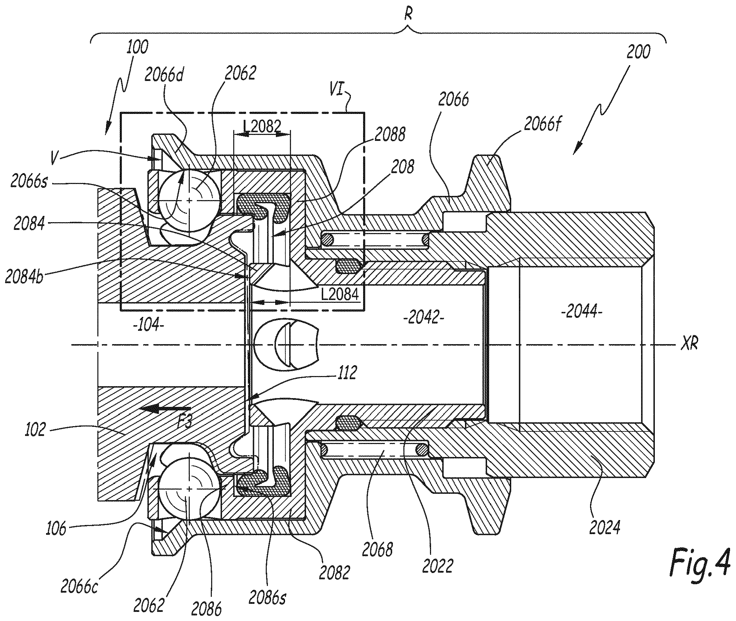

Dans la configuration accouplée représentée à la figure 4, le fluide peut circuler du canal 104 vers le canal 204, ou dans le sens inverse, et la pression du fluide au sein de ces canaux règne également dans la chambre d'étanchéité 208 puisque celle-ci communique avec le canal 204 à travers les ouvertures 2085. La pression du fluide dans la chambre 208 s'exerce sur la face avant 112 et a pour effet de repousser l'embout dans le sens de la flèche F3 à la figure 4, c'est-à-dire selon une direction axiale d'écartement de la face avant 112 par rapport au bord avant 2084b. Le mouvement de recul de l'embout mâle 100 sous l'effet de cette pression amène la bride 108 au contact des billes 2062 maintenues dans leur première position de blocage par la bague de verrouillage 2066, alors que l'étanchéité reste assurée par le contact étanche entre la bride 108 et le joint 210 et entre le joint 210 et le corps 202. En outre, la pression du fluide régnant dans la chambre d'étanchéité 208 a pour effet de plaquer fermement la lame avant 2104 contre la bride 108, ainsi que de plaquer la base 2102 contre la paroi 2082. L'étanchéité obtenue est ainsi améliorée par la pression du fluide transitant à travers le raccord R.

Dès lors que les billes 2062 s'engagent dans la gorge 106 et y sont maintenues par la bague de verrouillage 2066, c'est-à-dire dans la configuration de la figure 3 et la configuration accouplée de la figure 4, la face avant 112, disposée radialement à l'axe X2 entre le canal 104 et la rainure circonférentielle 114, est alignée selon l'axe longitudinal X2 avec la paroi radiale interne 2084.

Dans la configuration accouplée, et en fonction de la géométrie exacte du corps 102, l'embout 100 peut pivoter autour d'un axe perpendiculaire au plan de la figure 4 comme représenté par la trace du corps en traits mixtes sur cette figure. Le pivotement du corps 102 est limité par le bord avant 2084b de la paroi radiale interne 2084 contre lequel la face avant 112 vient en butée, sans risque de rupture d'étanchéité entre la bride 108 et le joint 210. En effet, l'amplitude du mouvement de pivotement autorisée pour l'embout entre les billes 2062 et la paroi radiale interne 2084 est faible par rapport au fléchissement élastique de la lame avant 2104, de sorte que la lame avant 2104 demeure en appui contre la bride 108, quelle que soit la position relative de la face avant 112 et du bord avant 2084b lorsque le raccord est en configuration accouplée. En outre, la paroi avant 2086 qui est disposée autour de la bride 108 en configuration accouplée, contribue à la limitation du pivotement de l'embout 100 dans l'élément femelle 200.

Lorsqu'il convient de désaccoupler ou désemmancher l'embout 100 par rapport à l'élément femelle 200, après coupure du passage du fluide dans le raccord R, l'opérateur exerce à nouveau sur la bague 2066 l'effort axial E4, ce qui a pour effet de rétracter la bague 2066 vers l'arrière du corps 202. En maintenant la bague 2066 dans sa deuxième position rétractée vers l'arrière en butée contre l'épaulement externe 202g du corps 202, l'opérateur peut tirer sur l'embout mâle 100, dans le sens de la flèche F3, ce qui lui permet d'extraire l'embout 100 du corps 202. Cette extraction est rendue possible par le fait que la bague de verrouillage 2066 libère les billes 2062 qui peuvent s'écarter radialement de l'axe XR en pénétrant dans le volume V lorsqu'elles sont chassées de la gorge périphérique 106 par la bride 108. Ceci induit que les billes 2062 laissent libre le passage pour l'embout 100 à l'intérieur du corps 202.

Lorsque l'embout 100 a ainsi été extrait hors de l'élément femelle 200, l'opérateur relâche la bague de verrouillage 2066 qui est ramenée vers l'avant par le ressort 2068 en butée contre le corps 202. L'élément femelle 200 est alors à nouveau dans la configuration de la figure 1 où il est prêt pour une nouvelle connexion.

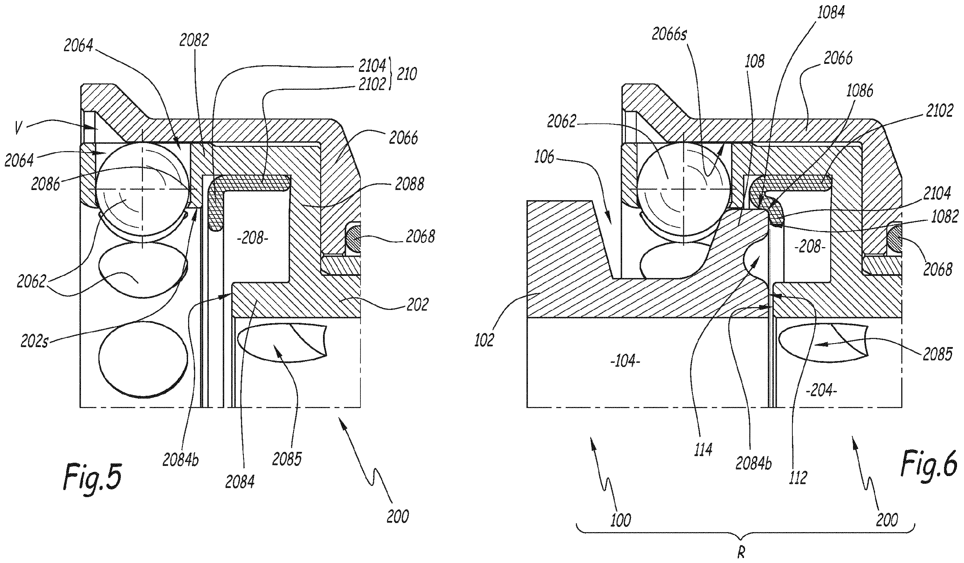

Dans les deuxième à cinquième modes de réalisation représentés aux figures 5 et suivantes, les éléments analogues à ceux du premier mode de réalisation portent les mêmes références. Dans ce qui suit, on décrit principalement ce qui distingue ces modes de réalisation du premier mode de réalisation. En particulier, dans les deuxième à cinquième modes de réalisation, la face avant 112 n'est pas en retrait vers l'arrière par rapport au bord avant 1082 de la bride 108 mais au même niveau longitudinal selon l'axe longitudinal X1. Le bord avant 2084b reste cependant en retrait de la surface axiale arrière 2086s le long de l'axe longitudinal X2 et le joint 210 des deuxième à cinquième modes de réalisation dépasse radialement, en direction de l'axe longitudinal X2, de la paroi avant 2086 au niveau d'une portion de l'axe longitudinal X2 disposée à l'avant du bord avant 2084b.

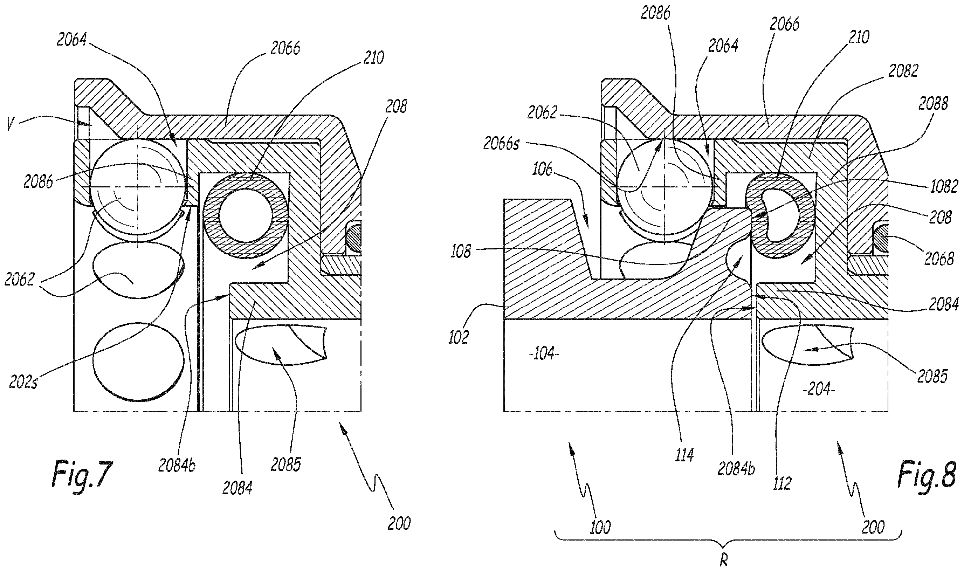

Les figures 5 et 6 sont des coupes prises dans un plan radial décalé des ouvertures 2085 prévues dans la paroi radiale interne 2084, alors que, dans les figures 1 à 4, le plan de coupe intersecte ces ouvertures. Les plans de coupe des figures 7 à 12 sont les mêmes que ceux des figures 5 et 6.

Dans le mode de réalisation des figures 5 et 6, le joint 210 a une section en L, et comprend une base 2102 externe annulaire et une lame avant 2104 reliée à la portion avant de la base 2102, mais pas de lame arrière analogue à la lame arrière 2106 du premier mode de réalisation. Dans ce mode de réalisation, le joint d'étanchéité 210 vient en appui contre la paroi arrière 2088 de la chambre d'étanchéité 208 par sa base 2102. En configuration accouplée, la bride 108 vient en appui contre le joint 210 et déforme la lame avant 2104.

Dans le troisième mode de réalisation représenté aux figures 7 et 8, le joint 210 est à section tubulaire. En d'autres termes, il s'agit d'un joint creux à contour fermé qui est déformé par écrasement dans la configuration accouplée représentée à la figure 8. Le contact entre la bride 108 et le joint 210 a, dans ce cas, lieu sur toute la largeur radiale du bord avant 1082 de la bride radialement disposé entre la surface radiale externe 1084 et la rainure circonférentielle 114. On peut parler de contact frontal. Dans ce mode de réalisation, la surface périphérique externe du joint 210 est en contact à la fois avec la paroi radiale externe 2082 et avec la paroi arrière 2088 de la chambre d'étanchéité 208.

Selon une variante non représentée de l'invention, le joint 210 de ce mode de réalisation est plein, c'est-à-dire dépourvu d'un évidement central, moyennant le choix d'un matériau suffisamment souple pour le joint 210 pour permettre sa déformation élastique sous l'effet de la bride 108.

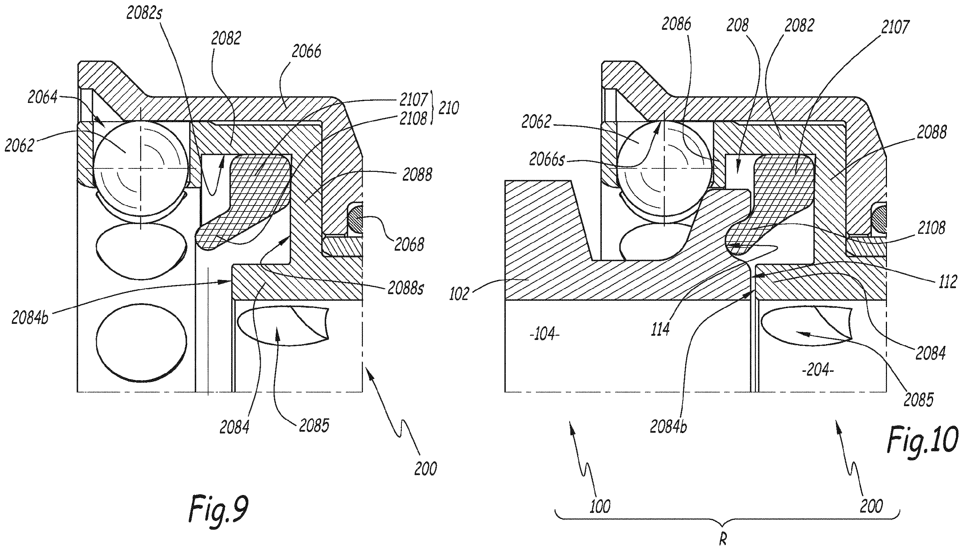

Dans le quatrième mode de réalisation visible aux figures 9 et 10, le joint d'étanchéité 210 comprend une base annulaire et externe 2107 ainsi qu'une lame 2108 qui est tronconique et convergente et qui s'étend depuis la base 2107 en direction de l'axe X2 vers l'avant de l'élément femelle 200. La base 2107 est à section polygonale avec deux surfaces planes, respectivement externe et arrière, qui viennent simultanément au contact de la surface radiale interne 2082s de la paroi radiale externe 2082 et de la surface 2088s de la paroi arrière 2088 de la chambre d'étanchéité 208. La lame 2108 est configurée pour s'engager et être fléchie dans la rainure circonférentielle 114 du corps 102 en configuration accouplée du raccord, ce qui permet un contact entre le corps 102 et le joint 210 sur une surface relativement importante. Ceci améliore encore l'étanchéité obtenue.

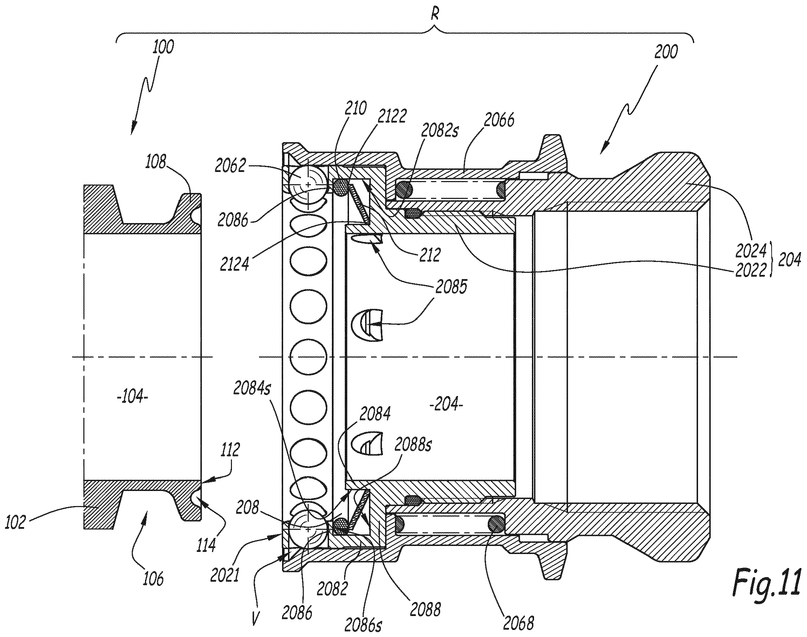

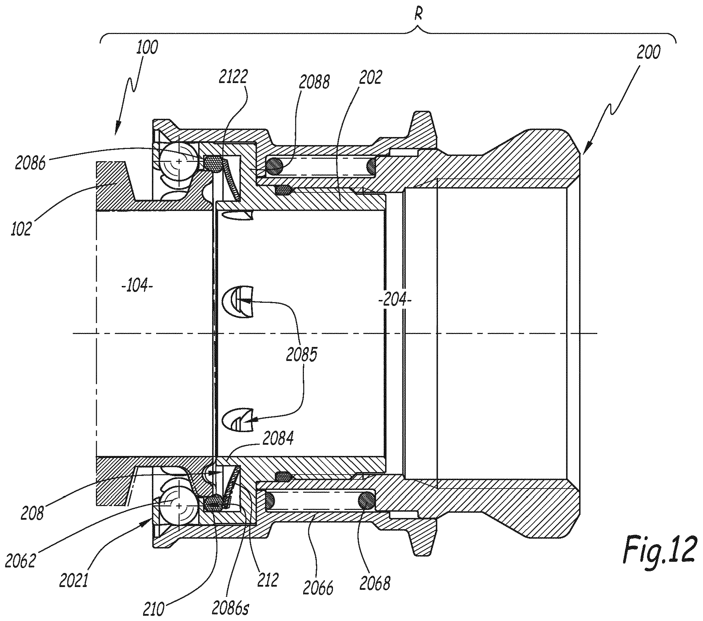

Dans le cinquième mode de réalisation représenté aux figures 11 et 12, un joint d'étanchéité torique 210 plein est logé dans la chambre d'étanchéité 208 en étant maintenu en position par une rondelle élastiquement déformable 212. Cette rondelle est tronconique et comprend un bord radial externe arrondi 2122 qui est au contact du joint torique 210 et un bord radial interne 2124 qui prend appui sur une zone de jonction de la surface radiale externe 2084s de la paroi radiale interne 2084 et de la surface avant 2088s de la paroi arrière 2088 de la chambre d'étanchéité 208.

En variante, le bord 2124 prend appui uniquement contre la paroi arrière 2088. La rondelle élastique 212 repousse élastiquement le joint torique 210 en direction de la paroi avant 2086, en appui contre la surface axiale arrière 2086s et contre la surface radiale interne 2082s de la chambre d'étanchéité 208.

Lors de l'introduction de l'embout mâle 100 dans le corps 202, la bride 108 parvient au contact du joint torique 210 qu'elle tend à repousser vers l'arrière de l'élément femelle 200. La rondelle 212 se déforme alors par rapport à sa configuration d'origine représentée à la figure 11 et repousse le joint torique 200 vers le bord avant 2021 du corps 202 et vers la paroi avant 2086 de la chambre d'étanchéité 208, ce qui a pour effet de plaquer fermement le joint torique 210 contre la surface périphérique externe de la bride 108, alors que l'effort nécessaire à l'emmanchement de l'embout mâle 100 dans le corps 202 de l'élément femelle est maîtrisé car la rondelle 212 adapte le volume dévolu au joint 210 en fonction de la géométrie et de la position du corps 102 et limite donc la compression de la matière du joint 210. En particulier, dans le cas d'un corps 102 avec une géométrie proche des dimensions maximales des tolérances, la rondelle 212 se déforme plus que dans le cas d'un corps 102 avec une géométrie proche d'une tolérance minimale car, plus le diamètre externe de la bride 108 est élevé, moins le volume disponible pour le joint 210 au voisinage de la paroi avant 2086 et entre cette bride et la paroi radiale externe 2082 est réduit.

Selon un aspect qui n'est pas visible sur les figures 11 et 12, la rondelle peut être pourvue de perçages traversants permettant de mettre en communication fluidique les deux compartiments de la chambre d'étanchéité 208 définis de part et d'autre de cette rondelle.

La rondelle 212 est de préférence réalisée en matériau polymère, par exemple PEEK.

En configuration accouplée, l'inclinaison de l'embout 100 dans l'élément 200 par rapport à l'axe longitudinal X2 est limitée par la mise en butée de la face avant 112 et du bord avant 2084b et modifie, au moins localement, le fléchissement de la rondelle 212 qui maintient le joint 210 au contact du corps 102 mais modifie le volume dévolu au joint 210.

En variante non représentée, la rondelle 212 agit sur un joint de géométrie différente, non torique ou creux comme par exemple le joint 210 du troisième mode de réalisation décrit.

Quel que soit le mode de réalisation considéré, le fait que la chambre d'étanchéité 208 est délimitée radialement vers l'intérieur par la paroi 2084 permet de limiter les mouvements de pivotement de l'embout mâle 100 dans le corps 202 en configuration accouplée du raccord R, ce qui garantit le maintien de l'étanchéité assuré par le joint 210. Ceci tient compte du fait que, compte tenu de la géométrie d'un embout clamp dont la bride 108 a une longueur axiale faible, de l'ordre de 3 mm, on ne peut pas réduire le couple de pivotement de cet embout à l'intérieur du corps 202 par la seule mise en contact de la surface radiale externe de la bride 108 avec la surface radiale interne 202s du corps 202. En outre, les ouvertures traversantes 2085 permettent au fluide transitant à travers le raccord R de renforcer l'étanchéité en plaquant le joint 210 à la fois contre le corps 104 et contre les parois 2082 et/ou 2088 de la chambre d'étanchéité 208. Ces ouvertures 2085 permettent également au fluide circulant dans le raccord de venir nettoyer la chambre d'étanchéité 208, ce qui autorise d'espacer d'autant les opérations de maintenance du joint 210 et de nettoyage de la chambre d'étanchéité 208.

Le fait que la chambre 208 est réalisé dans une partie monobloc 2022 du corps 202, c'est-à-dire le fait que les parois 2082, 2084, 2086 et 2088 sont monoblocs, garantit précisément la géométrie de la chambre d'étanchéité 208, en fonction de la géométrie nominale de l'embout 100, ce qui limite l'amplitude de pivotement de l'embout mâle 100 dans le corps 102.

De plus, comme le bord avant 2084b de la paroi radiale interne 2084 est en retrait de la surface axiale arrière 2086s de la paroi avant 2086, sur la distance d1, l'embout 100 peut, en cours d'accouplement, venir en contact étanche avec le joint 210 avant de parvenir en butée contre la paroi radiale interne 2084.

De plus, une partie du joint d'étanchéité 210, à savoir la lame avant 2104 dans les premier et deuxième modes de réalisation, la lame 2108 dans le troisième mode de réalisation et la portion radiale interne du joint 210 dans les troisième et cinquième mode de réalisation, dépasse de la paroi avant 2086, radialement, vers l'axe XR, au niveau d'une portion de l'axe longitudinal disposée à l'avant du bord avant 2084b. Quelle que soit la géométrie de l'embout, dans les limites de tolérance prévues, le contact étanche entre le joint 210 et le corps 102 de l'embout est optimisé lorsque le joint est apte à suivre le contour externe de l'embout en limitant la compression de la matière constituant le joint 210. Tel est en particulier le cas pour un joint qui se déforme en fléchissant comme dans les premier, deuxième et quatrième modes de réalisation ou qui occupe un volume variable comme dans le cinquième mode de réalisation.

Quel que soit le mode de réalisation, le nettoyage de l'élément de raccord femelle 200 ne nécessite que le démontage du joint 210. On remarque également que, lorsque le joint 210 est symétrique par rapport à un plan radial à l'axe X2, les risques de mauvais montage sont limités.

Un avantage particulier des premier, deuxième et quatrième modes de réalisation est qu'un joint 210 équipé d'une lame 2104, 2106 ou 2108 est relativement facile à retirer de la chambre d'étanchéité 208.

Quel que soit le mode de réalisation considéré, des organes de verrouillage autres que les billes 2062 peuvent être prévus notamment sous la forme de doigts rotatifs ou mobiles en rotation ou sous la forme de segments, dont le mouvement par rapport au corps 202 entre leur première position de blocage et leur deuxième position de libération a au moins une composante radiale, et qui interagissent avec la bague de verrouillage 2066.

Selon une autre variante, la paroi avant 2086 peut être omise avec la surface radiale interne 2082s au même niveau radial que la surface radiale interne 202s du corps 202 au niveau des orifices 2064.

Selon une autre variante, le nombre d'ouverture 2085 n'est pas égal à quatre. Il peut en particulier être supérieur à quatre.

Selon une autre variante, la bague est mobile en rotation autour du corps 202 entre sa première position de maintien des organes de verrouillage en position de blocage et sa deuxième position où elle libère les organes de verrouillage.

Le matériau du joint 210 peut être différent d'un élastomère, par exemple un silicone.

Les modes de réalisation et variantes envisagés ci-dessus peuvent être combinés pour générer de nouveaux modes de réalisation de l'invention.

## Revendications

1. Elément (200) de raccord apte à être accouplé avec un embout (100) complémentaire pour la jonction de deux conduites (C1, C2) de fluide, l'élément de raccord comprenant un corps (202) de réception de l'embout complémentaire (100), ce corps étant centré sur un axe longitudinal (X2) et comportant, un canal (204) de circulation de fluide au sein du corps et une chambre d'étanchéité (208) qui entoure le canal (204) et dans laquelle est logé un joint d'étanchéité (210) apte à coopérer avec l'embout complémentaire introduit dans le corps (202), la chambre d'étanchéité (208) étant délimitée par une paroi radiale externe (2082), une paroi avant, une paroi arrière (2088) et, radialement vers l'intérieur par rapport à l'axe longitudinal (X2), par une paroi radiale interne (2084) solidaire du corps (202), cet élément de raccord comprenant un mécanisme de verrouillage (206) qui comporte :
• au moins un organe de verrouillage (2062) mobile radialement dans le corps par rapport à l'axe longitudinal (X2), entre une position de blocage de l'embout complémentaire (100) dans le corps et une position de libération du passage de l'embout dans le corps et
• une bague de verrouillage (2066) montée autour du corps et mobile par rapport à celui-ci, entre une première position de maintien des organes de verrouillage (2062) dans leur position de blocage et une deuxième position dans laquelle la bague de verrouillage ne s'oppose pas au déplacement des organes de verrouillage vers leur position de libération,
cet élément de raccord étant **caractérisé en ce qu'** un bord avant (2084b) de la paroi radiale interne (2084) est en retrait (d1), le long de l'axe longitudinal (X2), par rapport à la surface arrière (2086s) de la paroi avant (2086).

2. Elément de raccord selon la revendication 1, **caractérisé en ce que** la paroi radiale interne (2084) de la chambre d'étanchéité (208) est pourvue d'au moins une ouverture (2085) de mise en communication de la chambre d'étanchéité avec le canal (204) de circulation de fluide au sein du corps (202).

3. Elément de raccord selon l'une des revendications précédentes, **caractérisé en ce que** les parois radiale externe (2082), arrière (2088) et radiale interne (2084) forment une pièce monobloc.

4. Elément de raccord selon la revendication 3, **caractérisé en ce que** la paroi avant (2086) forme une pièce monobloc avec la paroi radiale externe (2082), la paroi arrière (2088) et la paroi radiale interne (2084).

5. Elément de raccord selon l'une des revendications précédentes, **caractérisé en ce que**, en configuration désaccouplée de l'élément de raccord (200), le joint (210) dépasse radialement de la paroi avant (2086), en direction de l'axe longitudinal (X2), au niveau d'une portion de l'axe longitudinal (X2) disposée à l'avant du bord avant (2084b) de la paroi radiale interne (2084).

6. Elément de raccord selon l'une des revendications précédentes, **caractérisé en ce que** les logements (2064) des organes de verrouillage (2062) dans le corps (202) sont ménagés dans la paroi avant (2086) et **en ce que** les organes de verrouillage font saillie radialement de la paroi avant (2086) dans leur position de blocage.

7. Elément de raccord selon l'une des revendications précédentes, **caractérisé en ce que** les organes de verrouillage sont des billes (2062) et **en ce que** la bague de verrouillage (2066) définit une surface radiale interne (2066s) de recouvrement des billes dans leur position de blocage lorsque la bague de verrouillage (2066) est dans sa première position et un volume (V) de réception partielle des billes dans leur position de libération lorsque la bague de verrouillage (2066) est dans sa deuxième position, ce volume de réception partielle étant lui-même délimité vers l'extérieur, radialement à l'axe longitudinal (X2), par une portion (2066d) de la bague de verrouillage.

8. Elément de raccord selon l'une des revendications précédentes, **caractérisé en ce que** le joint d'étanchéité (210) comprend une base (2102 ; 2107) externe en appui contre la paroi radiale externe (2082) et/ou la paroi arrière (2088) de la chambre d'étanchéité (208) et au moins une lame (2104, 2106; 2108) qui, en configuration désaccouplée de l'élément de raccord, s'étend à partir de la base et vers l'axe longitudinal (X2).

9. Elément de raccord selon la revendication 8, **caractérisé en ce qu'**en configuration désaccouplée de l'élément de raccord, la lame (2104) s'étend vers l'axe longitudinal (X2), à partir d'une portion avant de la base (2102) et selon une direction dirigée vers l'arrière de l'élément de raccord (200).

10. Elément de raccord selon la revendication 9, **caractérisé en ce que**, en configuration désaccouplée de l'élément de raccord, un angle (β), défini entre la lame (2104) et la base (2102), est compris entre 65° et 80°.

11. Elément de raccord selon l'une des revendications précédentes, **caractérisé en ce que**, en configuration désaccouplée de l'élément du raccord, le joint d'étanchéité (210) est symétrique par rapport à un plan (P) perpendiculaire à l'axe longitudinal (X2).

12. Elément de raccord selon l'une des revendications précédentes, **caractérisé en ce que**, en configuration désaccouplée de l'élément de raccord, le joint d'étanchéité (210) présente, dans un plan radial à l'axe longitudinal, une section globalement en forme de U ouvert en direction de l'axe longitudinal (X2).

13. Elément de raccord selon l'une des revendications 1 à 7, **caractérisé en ce qu'**une rondelle élastique (212) est disposée, en appui contre le joint d'étanchéité (210), dans la chambre d'étanchéité (208).

14. Elément de raccord selon la revendication 13, **caractérisé en ce que** la rondelle (212) prend appui sur la paroi arrière (2088) de la chambre d'étanchéité (208) et repousse le joint d'étanchéité (210) en direction d'une paroi avant (2086) délimitant la chambre d'étanchéité (208).

15. Raccord (R) comprenant un élément de raccord (200), et un embout (100) complémentaire, l'embout complémentaire étant pourvu
- d'un canal central (104) de passage de fluide,
- d'une cavité radiale externe (106) de réception d'au moins un organe de verrouillage (2062) en configuration accouplée du raccord, la cavité de réception étant délimitée à l'avant par une bride (108),
- d'une face avant (112) et
- d'une rainure circonférentielle (114) bordant la face avant (112), la face avant (112) étant disposée radialement entre le canal central (104) de l'embout complémentaire et la rainure circonférentielle (114),
**caractérisé en ce que** l'élément de raccord (200) est selon l'une des revendications précédentes et **en ce que**, en configuration accouplée du raccord, la paroi interne (2084) de la chambre d'étanchéité (208) est alignée selon l'axe longitudinal (X2) de l'élément de raccord avec la face avant (112) de l'embout complémentaire.

## Patentansprüche

1. Kupplungselement (200), das geeignet ist, mit einem komplementären Stutzen (100) für die Verbindung von zwei Fluidleitungen (C1, C2) gekoppelt zu werden, wobei das Kupplungselement einen Körper (202) zur Aufnahme des komplementären Stutzens (100) umfasst, wobei dieser Körper auf eine Längsachse (X2) zentriert ist und einen Fluidströmungskanal (204) in dem Körper und eine Dichtungskammer (208) aufweist, die den Kanal (204) umgibt und in der eine Dichtung (210) gelagert ist, die geeignet ist, mit dem komplementären, in den Körper (202) eingeführten Stutzen zusammenzuarbeiten, wobei die Dichtungskammer (208) durch eine radiale Außenwand (2082), eine Vorderwand, eine Rückwand (2088) und radial nach innen in Bezug auf die Längsachse (X2) durch eine mit dem Körper (202) verbundene, radiale Innenwand (2084) begrenzt ist, wobei das Kupplungselement ein Verriegelungsmechanismus (206) umfasst, der aufweist:
• mindestens ein Verriegelungselement (2062), das radial in dem Körper in Bezug auf die Längsachse (X2) zwischen einer Verriegelungsstellung des komplementären Stutzens (100) in dem Körper und einer Freigabestellung des Übergangs des Stutzens in dem Körper beweglich ist, und
• einen Verriegelungsring (2066), der um den Körper herum montiert ist und in Bezug auf diesen zwischen einer ersten Stellung zum Halten der Verriegelungselemente (2062) in ihrer Sperrstellung und einer zweiten Stellung, in der der Verriegelungsring sich nicht der Bewegung der Verriegelungselemente in ihre Freigabestellung widersetzt, beweglich ist,
wobei dieses Kupplungselement **dadurch gekennzeichnet ist, dass** ein vorderer Rand (2084b) der radialen Innenwand (2084) entlang der Längsachse (X2) in Bezug auf die Rückfläche (2086s) der Vorderwand (2086) zurückgesetzt (d1) ist.

2. Kupplungselement nach Anspruch 1, **dadurch gekennzeichnet, dass** die radiale Innenwand (2084) der Dichtungskammer (208) mit mindestens einer Öffnung (2085) für eine Verbindung der Dichtungskammer mit dem Fluidströmungskanal (204) in dem Körper (202) versehen ist.

3. Kupplungselement nach einem der vorhergehenden Ansprüche, **dadurch gekennzeichnet, dass** die radiale Außenwand (2082), die Rückwand (2088) und die radiale Innenwand (2084) aus einem einzigen Teil bestehen.

4. Kupplungselement nach Anspruch 3, **dadurch gekennzeichnet, dass** die Vorderwand (2086) einstückig mit der radialen Außenwand (2084), der Rückwand (2088) und der radialen Innenwand (2084) verbunden ist.

5. Kupplungselement nach einem der vorhergehenden Ansprüche, **dadurch gekennzeichnet, dass** in der entkuppelten Stellung des Kupplungselements (200) die Dichtung (210) radial die Vorderwand (2086) in Richtung der Längsachse (X2) an einem Teil der Längsachse (X2), das vor dem Vorderrand (2084b) der radialen Innenwand (2084) angeordnet ist, überragt.

6. Kupplungselement nach einem der vorhergehenden Ansprüche, **dadurch gekennzeichnet, dass** die Aufnahmen (2064) der Verriegelungselemente (2062) in dem Körper (202) in der Vorderwand (2086) eingearbeitet sind und dass die Verriegelungselemente radial zu der Vorderwand (2086) in ihrer Sperrstellung herausragen.

7. Kupplungselement nach einem der vorhergehenden Ansprüche, **dadurch gekennzeichnet, dass** die Verriegelungselemente Kugeln (2062) sind und dass der Verriegelungsring (2066) eine radiale Innenfläche (2066s) der Überdeckung der Kugeln in ihrer Sperrstellung, wenn der Verriegelungsring (2066) in seiner ersten Stellung ist, und ein Volumen (V) zum teilweisen Aufnehmen der Kugeln in ihrer Freigabestellung, wenn der Verriegelungsring (2066) in seiner zweiten Stellung ist, definiert, wobei das Volumen zur teilweisen Aufnahme selbst nach außen radial zur Längsachse (X2) durch einen Bereich (2066d) des Verriegelungsrings begrenzt ist.

8. Kupplungselement nach einem der vorhergehenden Ansprüche, **dadurch gekennzeichnet, dass** die Dichtung (210) ein äußeres Grundteil (2102; 2107) in Anlage gegen die radiale Außenwand (2082) und/oder die Rückwand (2088) der Dichtungskammer (208) und mindestens eine Lamelle (2104, 2106; 2108) umfasst, die in der entkuppelten Stellung des Kupplungselements sich von dem Grundteil zur Längsachse (X2) erstreckt.

9. Kupplungselement nach Anspruch 8, **dadurch gekennzeichnet, dass** in der entkuppelten Stellung des Kupplungselements die Lamelle (2104) sich zur Längsachse (X2) von einem Vorderbereich des Grundteils (2102) und gemäß einer nach hinten in Bezug auf das Kupplungselement (200) gerichteten Richtung erstreckt.

10. Kupplungselement nach Anspruch 9, **dadurch gekennzeichnet, dass** in der der entkuppelten Stellung des Kupplungselements ein Winkel (β), der zwischen der Lamelle (2104) und dem Grundteil (2102) definiert ist, zwischen 65° und 80° liegt.

11. Kupplungselement nach einem der vorhergehenden Ansprüche, **dadurch gekennzeichnet, dass** in der entkuppelten Stellung des Kupplungselements die Dichtung (210) symmetrisch in Bezug auf eine Ebene (P) senkrecht zur Längsachse (X2) ist.

12. Kupplungselement nach einem der vorhergehenden Ansprüche, **dadurch gekennzeichnet, dass** in der entkuppelten Stellung des Kupplungselements die Dichtung (210) in einer radialen Ebene zur Längsachse einen im Wesentlichen U-förmigen Querschnitt mit einer Öffnung in Richtung der Längsachse (X2) aufweist.

13. Kupplungselement nach einem der Ansprüche 1 bis 7, **dadurch gekennzeichnet, dass** eine elastische Dichtungsscheibe (212) in Anlage gegen die Dichtung (210) in der Dichtungskammer (208) angeordnet ist.

14. Kupplungselement nach Anspruch 13, **dadurch gekennzeichnet, dass** die Dichtungsscheibe (212) sich gegen die Rückwand (2088) der Dichtungskammer (208) abstützt und die Dichtung (210) in Richtung der Vorderwand (2086), die die Dichtungskammer (208) begrenzt, drückt.

15. Kupplung (R), ein Kupplungselement (200) und einen komplementären Stutzen (100) umfassend, wobei der komplementäre Stutzen versehen ist mit
- einem Mittelkanal (104) für die Durchgang des Fluids,
- einen radialen Außenhohlraum (106) zur Aufnahme mindestens eines Verriegelungselements (2062) in der gekuppelten Stellung der Kupplung, wobei der Aufnahmehohlraum nach vorn durch einen Flansch (108) begrenzt ist,
- eine Vorderfläche (112) und
- eine Umfangsnut (114), die die Vorderfläche (112) einfasst, wobei die Vorderfläche (112) radial zwischen dem Mittelkanal (104) des komplementären Stutzens und der Umfangsnut (114) angeordnet ist,
**dadurch gekennzeichnet, dass** das Kupplungselement (200) nach einem der vorhergehenden Ansprüche ausgebildet ist und dass in der gekuppelten Stellung der Kupplung die Innenwand (2084) der Dichtungskanal (208) gemäß der Längsachse (X2) des Kupplungselements mit der Vorderfläche (112) des komplementären Stutzens ausgerichtet ist.

## Claims

1. A coupling element (200) to be coupled with a complementary end-piece (100) to join two fluid pipes (C1, C2), the coupling element comprising a body (202) for partially receiving a complementary end-piece (100), this body being centered on a longitudinal axis (X2) and including a fluid circulation channel (204) within the body and a sealing chamber (208) that surrounds the channel (204) and in which a sealing gasket (210) able to cooperate with the complementary end-piece inserted in the body (202) is housed, the sealing chamber (208) being defined by an outer radial wall (2082), a front wall, a rear wall (2088) and, radially inward relative to the longitudinal axis (X2), an inner radial wall (2084) secured to the body (202), this coupling element comprising a locking mechanism (206) that includes:
• at least one locking member (2062) radially movable in the body relative to the longitudinal axis (X2), between a position blocking the complementary end-piece (100) in the body and a position freeing the passage of the end-piece in the body, and
• a locking ring (2066) mounted around the body and movable relative thereto, between a first position keeping the locking members (2062) in their blocking position and a second position in which the locking ring does not oppose the movement of the locking members toward their released position,
this coupling element being **characterized in that** a front edge (2084b) of the inner radial wall (2084) is offset backward (d1), along the longitudinal axis (X2), relative to the rear surface (2086s) of the front wall (2086).

2. The coupling element according to claim 1, **characterized in that** the inner radial wall (2084) of the sealing chamber (208) is provided with at least one opening (2085) for placing the sealing chamber in communication with the fluid circulation channel (204) within the body (202).

3. The coupling element according to one of the preceding claims, **characterized in that** the outer radial (2082), rear (2088) and inner radial (2084) walls form a single piece.

4. The coupling element according to claim 3, **characterized in that** the front wall (2086) forms a single piece with the outer radial wall (2082), the rear wall (2088) and the inner radial wall (2084).

5. The coupling element according to one of the preceding claims, **characterized in that**, in the uncoupled configuration of the coupling element (200), the seal (210) radially protrudes from the front wall (2086), toward the longitudinal axis (X2), at a portion of the longitudinal axis (X2) positioned in front of the front edge (2084b) of the inner radial wall (2084).

6. The coupling element according to one of the preceding claims, **characterized in that** the housings (2064) of the locking members (2062) in the body (202) are arranged in the front wall (2086) and **in that** the locking members protrude radially from the front wall (2086) in their blocking position.

7. The coupling element according to one of the preceding claims, **characterized in that** the locking members are balls (2062), and **in that** the locking ring (2066) defines an inner radial covering surface (2066s) of the balls in their blocking position when the locking ring (2066) is in its first position and a partial receiving space (V) of the balls in the released position when the locking ring (2066) is in its second position, this partial receiving space in turn being outwardly defined, radially to the longitudinal axis (X2), by a portion (2066d) of the locking ring.

8. The coupling element according to one of the preceding claims, **characterized in that** the sealing gasket (210) comprises an outer base (2102; 2107) bearing against the outer radial wall (2082) and/or the rear wall (2088) of the sealing chamber (208) and at least one blade (2104, 2106; 2108) which, in the uncoupled configuration of the coupling element, extends from the base and toward the longitudinal axis (X2).

9. The coupling element according to claim 8, **characterized in that** in the uncoupled configuration of the coupling element, the blade (2104) extends toward the longitudinal axis (X2), from a front portion of the base (2102) and in a direction oriented toward the rear of the coupling element (200).

10. The coupling element according to claim 9, **characterized in that**, in the uncoupled configuration of the coupling element, an angle (β), defined between the blade (2104) and the base (2102), is comprised between 65° and 80°.

11. The coupling element according to one of the preceding claims, **characterized in that**, in the uncoupled configuration of the coupling element, the sealing gasket (210) is symmetrical relative to a plane (P) radial to the longitudinal axis (X2).

12. The coupling element according to one of the preceding claims, **characterized in that**, in the uncoupled configuration of the coupling element, the sealing gasket (210) has, in a plane radial to the longitudinal axis, a globally U-shaped section open toward the longitudinal axis (X2).

13. The coupling element according to one of claims 1 to 7, **characterized in that** an elastic washer (212) is positioned, bearing against the sealing gasket (210), in the sealing chamber (208).

14. The coupling element according to claim 13, **characterized in that** the washer (212) bears on the rear wall (2088) of the sealing chamber (208) and pushes the sealing gasket (210) back toward a front wall (2086) defining the sealing chamber (208).

15. A coupling (R) comprising a coupling element (200), and a complementary end-piece (100), the complementary end-piece being provided with
- a central fluid passage channel (104),
- an outer radial cavity (106) for receiving at least one locking member (2062) in the coupled configuration of the coupling, the receiving cavity being defined in front by a flange (108),
- a front face (112), and
- a circumferential slot (114) that borders the front face (112), the front face (112) being positioned radially between the central channel (104) of the complementary end-piece and the circumferential slot (114),
**characterized in that** the coupling element (200) is according to one of the preceding claims and **in that**, in the coupled configuration of the coupling, the inner wall (2084) of the sealing chamber (208) is aligned along the longitudinal axis (X2) of the coupling element with the front face (112) of the complementary end-piece.
